# EUROPÄISCHE PATENTSCHRIFT

(11) **EP 2 767 356 B1**
(45) Veröffentlichungstag und Bekanntmachung des Hinweises auf die Patenterteilung: **22.11.2017**
(21) Anmeldenummer: 13155700.1
(22) Anmeldetag: 19.02.2013
(51) Int. Cl.: B23B 31/34, B23B 31/30, B23B 31/12, B23B 31/177

(54) **Schwenk-Spannfutter**
Pivoting collet chuck
Mandrin de serrage pivotant

(43) Veröffentlichungstag der Anmeldung: 20.08.2014
(73) Patentinhaber: SMW-AUTOBLOK Spannsysteme GmbH, 88074 Meckenbeuren (DE)
(72) Erfinder: Maurer, Eckhard, D-88094 Oberteuringen (DE)
(74) Vertreter: Engelhardt & Engelhardt

(56) Entgegenhaltungen:
- EP-A1- 0 258 557
- DE-B- 1 214 974
- GB-A- 2 015 391
- US-A- 2 980 432
- US-A1- 2003 011 146

## Beschreibung

Die Erfindung bezieht sich auf ein Schwenk-Spannfutter nach dem Oberbegriff des Patentanspruches 1. Ein solches Spannfutter ist beispielsweise aus der DE 12 14 974 B bekannt. Spannfutter sind seit Jahrzehnten bekannt und werden u.a. dazu eingesetzt, Muffen, also rotationssymmetrische Werkstücke, ortsfest an Werkzeugmaschinen zu halten, um ein Innengewinde in diese einzuarbeiten, die anschließend für Gas- oder Rohrleitungen als Verbindungs- und Dichtungselemente eingesetzt werden. Die herzustellenden Innengewinde sind selbstdichtend, so dass an die Anfertigung solcher Gewinde eine hohe Präzision zu stellen ist.

Je größer der Außendurchmesser solchen Muffen zu wählen ist, desto größer ist der Innendurchmesser eines Futterkörpers des Spannfutters auszugestalten, um das zu bearbeitende Werkstück überhaupt aufnehmen zu können. Darüber hinaus ist es erforderlich, dass die Innengewinde von beiden offenen Stirnseiten der Muffe in die Innenwand eingearbeitet werden, so dass die Muffe, nachdem das erste Innengewinde eingearbeitet ist, um 180° zu verschwenken ist.

Es ist auch bekannt, beispielsweise aus der DE 12 14 974 B oder der GB 2,015,391 A, für die Einspannung der Muffe zwei oder mehr Spannbacken vorzusehen, durch die nach deren Zustellung die Muffe zentrisch zu der Längsachse des Spannfutters positioniert ist. Die Bearbeitungspräzision hängt im Wesentlichen von der Zentrierung der Muffe bezogen auf deren Längsachse, die fluchtend zu der Längsachse der Werkzeugmaschine ausgerichtet ist, ab.

Die Drehzapfen des Schwenkringes werden mit Hilfe von Zahnstangen, die in trieblicher Wirkverbindung mit den jeweiligen Drehzapfen stehen, bewerkstelligt. Nachteiligerweise benötigen solche Antriebsmittel einen erheblichen Bauraum, durch den sich die Abmessungen des Futterkörpers wesentlich erhöhen, so dass der Futterkörper schwer baut und in der Herstellung teuer ist.

Bei sogenannten Zweibacken-Schwenk-Spannfuttern hat sich nachteiliger Weise herausgestellt, dass die Positionierung des zu bearbeitenden Werkstückes äußerst schwierig zu bewerkstelligen ist, denn die in Richtung der Gewichtskraft untere Spannbacke ist fest in dem Futterkörper bzw. an einem drehbar an dem Futterkörper angelenkten Schwenkring abgestützt, so dass eine Höhenregulierung dieser Spannbacke nicht möglich ist. Die gegenüberliegende Spannbacke ist zwar relativ zu dem Futterkörper radial beweglich, jedoch kann die Muffe, sollte das Zentrum der Muffe unterhalb der Längsachse des Futterkörpers angeordnet sein, nicht angehoben werden können, so dass anschließend die untere Spannbacke mit Unterlagsscheiben, Distanzplatten und dgl. aufzufüttern ist, deren Dicke an die vorhandene Abweichung anzupassen ist. Solche Einstellungsmaßnahmen sind zeitintensiv und müssen jedes Mal, wenn eine neue Charge von Muffen zu bearbeiten ist, wiederholt werden.

Zweibacken-Schwenk-Spannfutter können zwar groß bemessene Innendurchmesser von Muffen aufnehmen und diese können auch innerhalb des Futterkörpers um 180° gedreht werden, jedoch weisen solche Zweibacken-Schwenk-Spannfutter den Nachteil auf, dass die auftretenden Bearbeitungskräfte, die insbesondere senkrecht zu der Einspannrichtung verlaufen, nicht optimal abgestützt werden können, so dass durch die Bearbeitungskräfte die Muffe aus der zentrischen Position herausgedrückt werden könnte. Zudem ist das Werkstück zwischen zwei Spannbacken eingedrückt. Je größer die Einspannkräfte sind, des do größer ist die Gefahr, dass das Werkstück elastisch oder sogar plastisch verformt ist. Dies führt zu Bearbeitungsfehlern oder zu einer unbrauchbaren Muffe.

Sobald jedoch im Bereich der seitlichen bzw. horizontalen Ebenen weitere Spannbacken vorgesehen werden, können solche großdimensionierten Muffen nicht mehr gedreht werden, da diese Spannbacken Raum einnehmen, der für die Verdrehung der Muffe benötigt wird.

Wenn demnach mehrere Spannbacken, beispielsweise drei Spannbacken, verwendet werden, können ausschließlich kleiner dimensionierte Muffen bearbeitet bzw. eingespannt werden.

Aus der DE 12 14 974 B ist ein Zweibacken- oder Mehrbacken-Spannfutter zu entnehmen, durch das eine möglichst gleichmäßige Wandstärke des Futterkörpers zur Verfügung gestellt werden soll. Insbesondere die radiale Zustellung der Spannbacken, die synchron zu erfolgen hat, um eine zentrische Einspannung der Muffe zu erreichen, wird mit Hilfe eines Hydraulikkreislaufes gelöst, durch den ein jeder Spannbacke zugeordneter Spannkolben axial in dem Schwenkring verfahren ist, wobei der Spannkolben in trieblicher Wirkverbindung mit einer der Spannbacken steht.

Aus der US 4,811,963 ist zu entnehmen, mit welchen konstruktiven Maßnahmen der Schwenkring um 180° bezogen auf den Futterkörper mit einer eingespannten Muffe gedreht werden kann. Zu diesem Zweck sind in dem Futterkörper zwei axial bewegliche Zahnstangen vorgesehen. Die beiden Zahnstangen verlaufen parallel zueinander in einer Ebene und wirken gemeinsam auf ein Antriebsrad, das in trieblicher Wirkverbindung mit einem der Drehzapfen des Schwenkringes steht. Die beiden Zahnstangen werden gegenläufig zueinander bewegt und jeder Hub der jeweiligen Zahnstange bewirkt eine Verdrehung des Antriebsrades, durch das der Drehzapfen in Rotation versetzt ist.

Daher kann der Schwenkring ausschließlich um 180° bewegt werden, denn anschließend befinden sich die Zahnstangen in ihrer Endstellung und sind in die Ausgangsstellung zurückzuziehen, so dass der Schwenkring permanent um 180° gedreht wird.

Die bekannt gewordenen Mehrbacken-Schwenk-Spannfutter weisen nachteiliger Weise einen Außendurchmesser von mindestens 750 Millimeter und einen Innendurchmesser von etwa 185 Millimeter auf, um den erforderlichen Bauraum zur Aufnahme der Zahnstangen zur Verfügung zu stellen, da solche Spannfutter an Werkzeugmaschinen mit einem begrenzten Arbeitsraum anzubringen sind, nehmen diese bekannten Spannfutter einen erheblichen Platz ein, der für den Arbeitsbereich nicht mehr zur Verfügung steht.

Insbesondere wenn drei Spannbacken und drei Ausgleichsbacken vorzusehen sind, um die Zustell- und Spannkräfte von drei Spannbacken derart zu reduzieren, dass die auf die Werkstückoberfläche einwirkenden Einspannkräfte dieses nicht verformen oder zerstören, sondern vielmehr gleichmäßig verteilt sind, verringert sich der Innendurchmesser des Spannfutters erheblich, so dass ausschließlich Werkstücke mit einem geringen Außendurchmesser eingespannt werden können.

Darüber hinaus ist die Wandstärke des Futterkörpers im Bereich der Zahnstangen groß zu bemessen, um genügend Bauraum für die Aufnahme der Zahnstangen und der jeweiligen Zustellglieder zur Verfügung zu haben. Nachteiliger Weise bauen solchen Futterkörper sehr groß und weisen beispielsweise einen Außendurchmesser von 760 Millimeter bei einem Innendurchmesser von 160 Millimeter auf.

Es ist daher Aufgabe der Erfindung, ein Spannfutter der eingangs genannten Gattung weiter zu bilden, an dem mindestens drei Spannbacken vorgesehen sind, durch die die Zentrierung und Arretierung des Werkstückes an dem Futterkörper bewerkstelligt und gleichzeitig der Außendurchmesser des Futterkörpers maximal 400 Millimeter bei einem Innendurchmesser von etwa 180 Millimeter beträgt, um den Platzbedarf des Spannfutters zu verringern. Das Spannfutter soll demnach kompakt bauen und dabei möglichst groß bemessene Werkstücke aufnehmen können.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass jeder Drehzapfen einem jeweiligen Antriebsmittel zugeordnet ist, dass jeder Drehzapfen wechselweise in kraftschlüssiger Wirkverbindung mit einem der Antriebsmittel steht, wobei durch das jeweilige Antriebsmittel die Drehzapfen gleichgerichtet um einen Rotationswinkel, vorzugsweise von 45°, verdreht sind, derart, dass der Schwenkring eine Rotation um eine Schwenkachse in eine Richtung vollzieht, entsteht ein äußerst komplexes Spannfutter, denn die zur Verstellung der Spannbacken notwendigen Bauteile und die zur Verdrehung des Schwenkringes vorhandenen Antriebsmittel sind platzsparend im Futterkörper oder im Schwenkring eingebaut. Folglich kann der Außendurchmesser des Futterkörpers auf etwa 400 Millimeter bei einem Innendurchmesser von etwa 180 Millimeter begrenzt werden. Dies bewirkt eine Reduzierung des Bauraumes gegenüber dem bekannt gewordenen Stand der Technik um fast 50 Prozent, obwohl der Innendurchmesser des Futterkörpers in etwa gleich groß bemessen ist wie bei Ring-Schwenk-Spannfuttern nach dem Stand der Technik. Demnach können nahezu gleich groß bemessene Muffen oder andere rotationsymmetrische Werkstücke in dem Futterkörper eingespannt und bearbeitet werden.

Durch diese konstruktiven Maßnahmen verringern sich die Herstellungskosten des Futterkörpers, da erhebliches Material für die Herstellung des Futterkörpers eingespart werden kann. Gleichzeitig verringert sich auch die Gewichtskraft des Futterkörpers um nahezu 50 Prozent im Vergleich mit herkömmlichen Futterkörpern.

Der Bedienkomfort der bisherigen Spannfutter ist nach wie vor gegeben, da die Spannbacken mittels des hydraulischen oder pneumatischen Steuerkreislaufes und durch den Synchronring, der im Inneren des Spannringes axial beweglich angeordnet ist, gleichmäßig radial zustellbar sind, so dass das einzuspannende Werkstück zentrisch zu der Längsachse des Futterkörpers ausgerichtet ist.

Zudem weist das erfindungsgemäße Spannfutter den Vorteil auf, dass während der Verschwenkung des Werkstückes ein Beenden der Rotation des Futterkörpers und des Schwenkringes nicht erforderlich ist. Vielmehr kann der Schwenkring um 180° bewegt werden, obwohl der Futterkörper und folglich auch der Schwenkring noch rotieren. Da ein Abschalten des Futterkörpers und des Schwenkringes vermieden ist, während der Schwenkring um 180° verdreht ist, entstehen geringere Stillstandszeiten für die Bearbeitung des Werkstückes. Die Verdrehung des Schwenkringes, während der Futterkörper beispielsweise mit der halben Umdrehungsgeschwindigkeit im Vergleich mit der Umdrehungsgeschwindigkeit während des Bearbeitungsvorganges rotiert, ist dadurch erreicht, dass die Drehzapfen, die die gemeinsame Schwenkachse bilden, in ständiger kraft- oder formschlüssiger Wirkverbindung mit dem Schwenkring stehen, so dass dieser zuverlässig an dem Futterkörper arretiert ist. Auch die Einleitung der Verdrehkräfte auf die beiden Drehzapfen ermöglicht die Rotation des Schwenkringes um die Längsachse des Futterkörpers bei gleichzeitiger Verdrehung, denn die Kräfte wirken entlang der Schwenkachse, so dass nahezu keine störenden Drehmomente entstehen.

In der Zeichnung ist ein erfindungsgemäßes Ausführungsbeispiel eines Schwenk-Spannfutters dargestellt, das nachfolgend näher erläutert ist. Im Einzelnen zeigt:
- Figur 1: ein Schwenk-Spannfutter mit einem Futterkörper und einem in diesen eingesetzten Schwenkring, an dem drei Spannbacken radial zustellbar gelagert sind, in Draufsicht,
- Figur 2: das Spannfutter gemäß Figur 1 entlang der Schnittlinie II-II,
- Figur 3: das Spannfutter gemäß Figur 2 in perspektivischer Ansicht,
- Figur 4a: das Spannfutter gemäß Figur 1 entlang der Schnittlinie IVa-IVa,
- Figur 4b: das Spannfutter gemäß Figur 1 entlang der Schnittlinie IVb-IVb,
- Figur 4c: das Spannfutter gemäß Figur 4a entlang der Schnittlinie IVc-IVc,
- Figur 5a: das Spannfutter gemäß Figur 1 entlang der Schnittlinie Va-Va,
- Figur 5b: das Spannfutter gemäß Figur 1 entlang der Schnittlinie Vb-Vb und
- Figur 6: das Spannfutter gemäß Figur 1 entlang der Schnittlinie VI-VI.

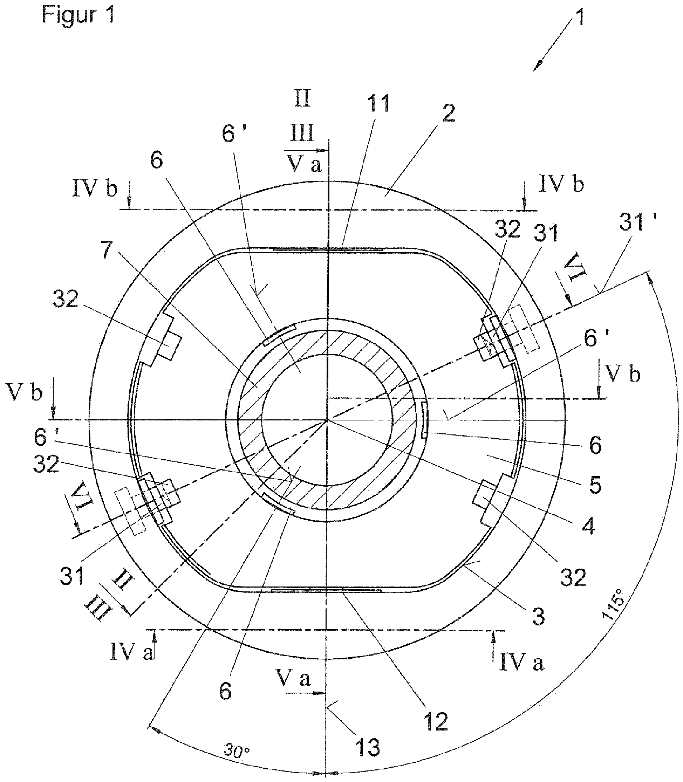

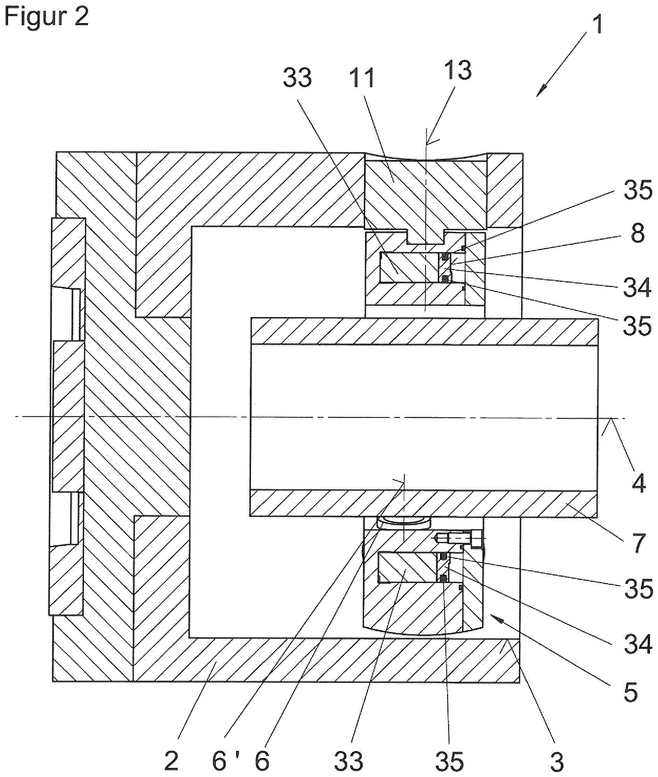

In den Figuren 1 und 2 ist ein Schwenk-Spannfutter 1 zu entnehmen, durch das ein rotationssymmetrisches Werkstück 7, beispielsweise eine Muffe, an einer nicht dargestellten Werkzeugmaschine zentrisch gehalten ist, um ein Innengewinde in die Muffe 7 einzuarbeiten. Solche Muffen 7 werden üblicherweise als Verbindungs- und Dichtungselemente für Rohrstücke genutzt, durch die eine Gas- oder Ölleitung gebildet ist. Die Muffen 7 weisen ein selbstdichtendes Innengewinde auf, so dass an die Fertigung dieses Gewindes eine hohe Präzisionsanforderung besteht. Folglich sind die Muffen 7 zentrisch zu der Längsachse 4 der Werkzeugmaschine und damit zu der Längsachse 4 des Spannfutters 1 auszurichten.

Das Spannfutter 1 besteht aus einem Futterkörper 2, in dem zentrisch zu dessen Längsachse 4 eine Aufnahmeöffnung 3 eingearbeitet ist. Die Aufnahmeöffnung 3 ist im Wesentlichen an die runde Außenkontur des Werkstückes 7 angepasst.

Des Weiteren ist in die Aufnahmeöffnung 3 des Futterkörpers 2 ein Schwenkring 5 eingesetzt, der trieblich mit dem Futterkörper 2 verbunden ist. Für die Bearbeitung des Werkstückes 7 ist der Futterkörper 2 nämlich in Rotation um die Längsachse 4 versetzt; die Rotation des Futterkörpers 2 wird auf den Schwenkring 5 übertragen, so dass zwischen dem Futterkörper 2 und dem Schwenkring 5 während des Bearbeitungsvorganges keine Relativbewegungen vorliegen.

Zur Arretierung des Werkstückes 7 sind in dem Schwenkring 5 drei Spannbacken 6 radial beweglich gelagert, die mittels einer Zustelleinrichtung 8 synchron in Richtung des Werkstückes 7 zugestellt sind. Durch die drei Spannbacken 6 ist demnach das Werkstück 7 in dem Schwenkring 5 zentrisch fixiert.

Im vorliegenden Ausführungsbeispiel sind an dem Schwenkring 5 drei Spannbacken 6 angeordnet, die in einem Teilungswinkel von 120° zueinander beabstandet sind. Es ist ohne weiteres denkbar, mehr als drei Spannbacken 6 an dem Schwenkring 5 anzubringen, und zwar insbesondere dann, wenn der Innendurchmesser der Aufnahmeöffnung 3 größer ausgestaltet werden kann.

Zudem ist der Schwenkring 5 in der Aufnahmeöffnung 3 relativ zu dem Futterkörper 2 um 180° zu verdrehen, denn das Werkstück 7 ist von beiden offenen Stirnseiten zu bearbeiten. Zunächst wird nämlich ein Teil des Innengewindes von einer ersten offenen Stirnseite in die Innenwand des Werkstückes 7 und anschließend, nachdem das Werkstück 7 um 180° mit Hilfe des Schwenkringes 5 in dem Futterkörper 2 verdreht ist, in die zweite offene Stirnseite des Werkstückes 7 eingearbeitet.

Für die Verschwenkung des Schwenkringes 5 sind zwei in dem Futterkörper 2 angeordnete Drehzapfen 11 und 12 vorgesehen, die in Richtung der Längsachse 4 des Futterkörpers 2 abstehen und eine gemeinsame Schwenkachse 13 bilden.

Es ist besonders erfindungswesentlich, dass die von den drei Spannbacken 6 gebildeten Spannachsen 6' winkelbeabstandet zu der Schwenkachse 13 verlaufen. Der Winkelabstand zwischen der Schwenkachse 13 und einer der Spannachsen 6' beträgt 30°. Ändert sich jedoch der Teilungswinkel der Spannachsen 6' zueinander, da mehrere Spannbacken 6 vorgesehen werden, verändert sich dieser Winkelabstand entsprechend.

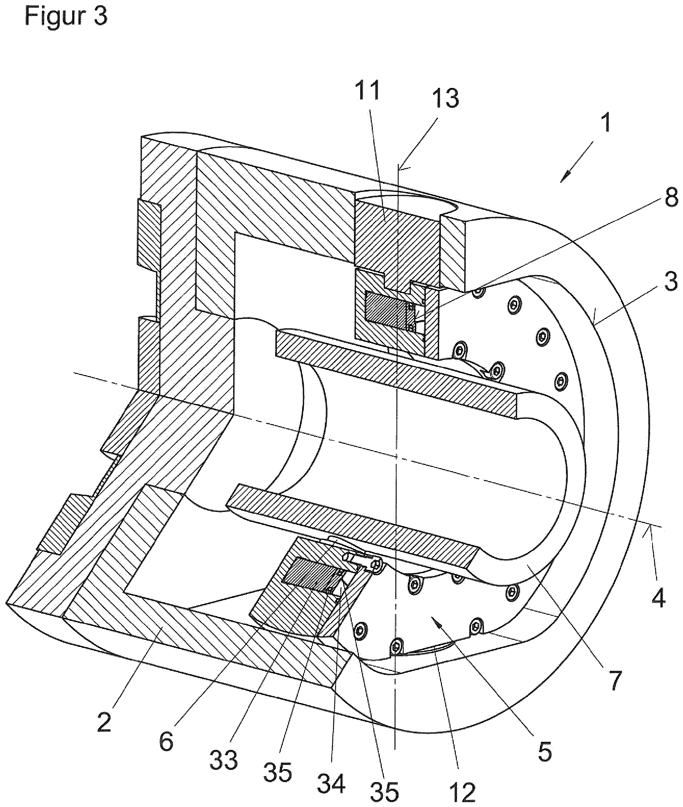

In den Figuren 2 und 3 sowie 5a ist zudem gezeigt, dass die in dem Schwenkring 5 eingebaute Zustelleinrichtung 8 die radiale Bewegung der jeweiligen Spannbacken 6 ermöglicht. Die Zustelleinrichtung 8 umfasst dabei einen Synchronring 33 und einen Deckel 34 des Synchronringes 33, der mit Hilfe einer Dichtung 35 einen Hydraulik- oder Pneumatikkreislauf 38 abdichtet. Durch eine in dem Hydraulik- oder Pneumatikkreislauf 38 eingebaute, nicht dargestellte Pumpe, wird nämlich das Fördermedium gleichmäßig von einer Seite der Zustelleinrichtung 8 in die gegenüberliegende Seite der Zustelleinrichtung 8 gepumpt, so dass der Synchronring 33 parallel zu der Längsachse 4 des Futterkörpers 2 hin und her bewegt ist.

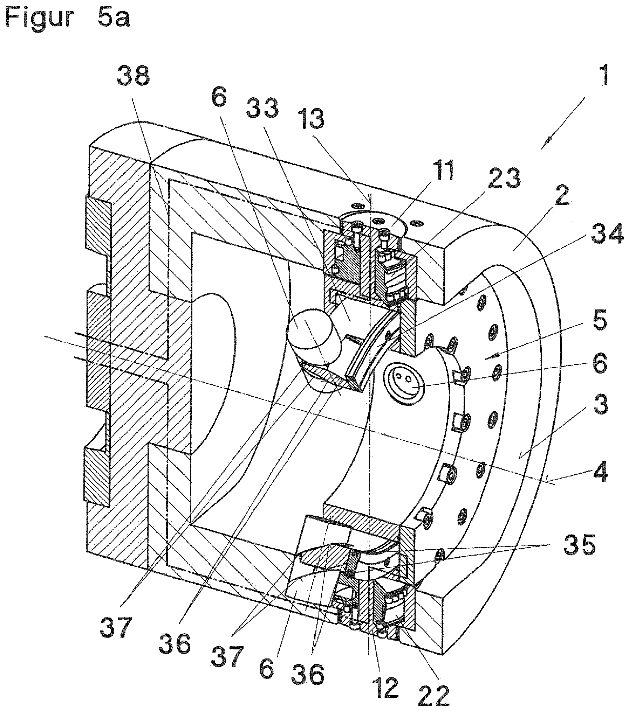

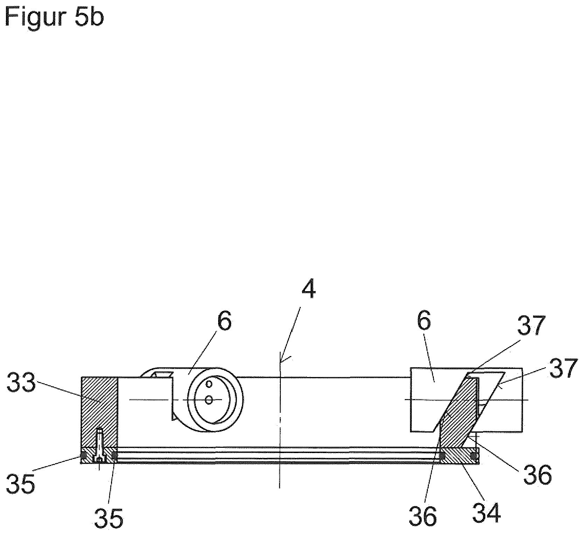

Die drei Spannbacken 6 sind in dem Schwenkring 5 derart eingebaut, dass diese in kraft- oder formschlüssiger Wirkverbindung mit dem Synchronring 33 stehen. Insbesondere den Figuren 5a und 5b ist dabei zu entnehmen, dass an dem Synchronring 33 jeweils eine geneigt verlaufende Antriebsfläche 36 angearbeitet ist, auf der eine an dem jeweiligen Spannbacken 6 angearbeitete Anlagefläche 37 aufliegt. Sobald demnach der Synchronring 33 in Richtung des offenen Endes des Futterkörpers 2 bewegt ist, werden die drei Spannbacken 6 synchron aus dem Schwenkring 5 in Richtung des Werkstückes 7 herausgedrückt und gelangen folglich mit diesem in einen kraftschlüssigen Wirkkontakt, durch den das Werkstück 7 an dem Futterkörper 2 zentrisch arretiert ist.

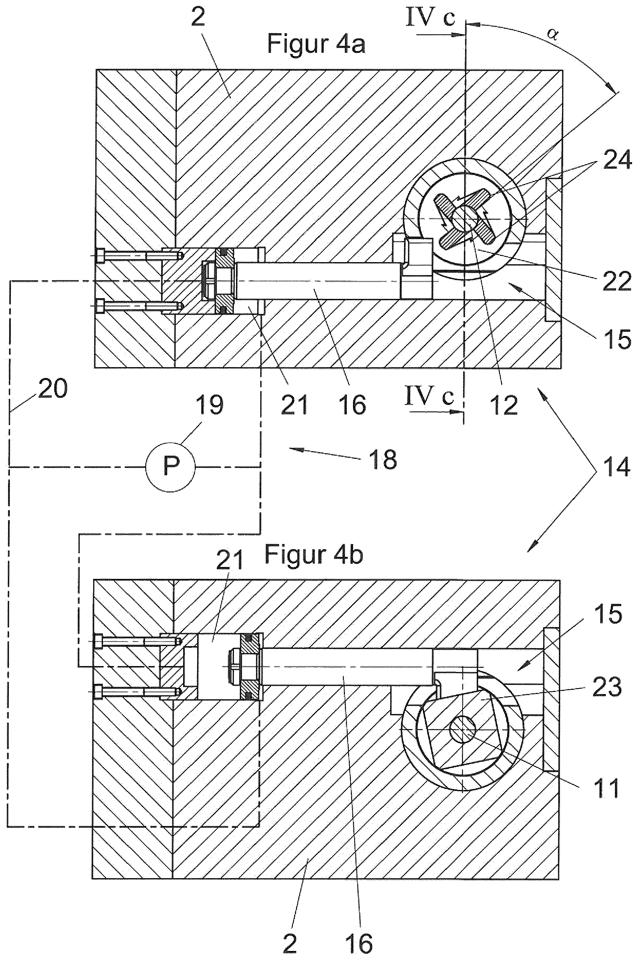

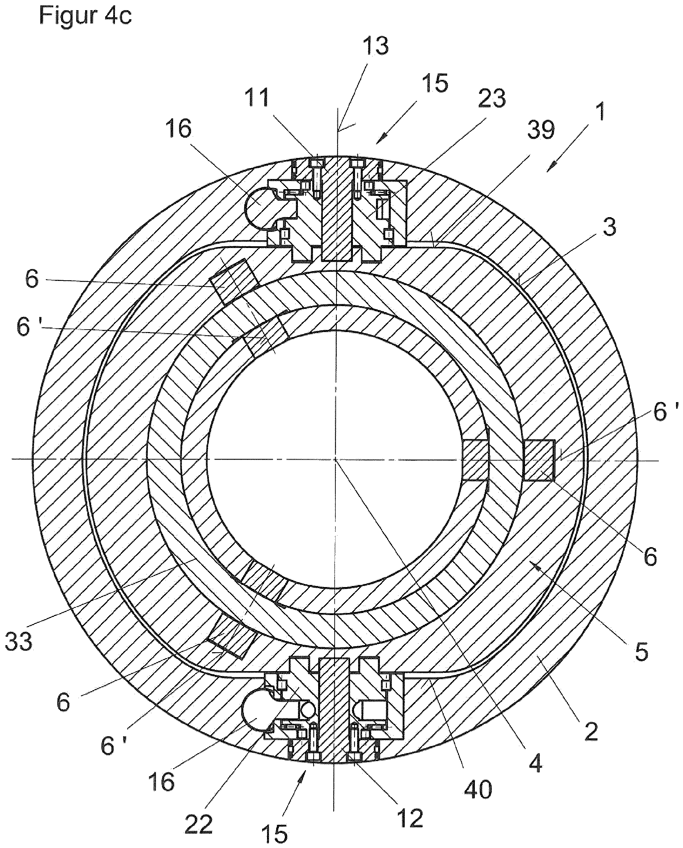

In den Figuren 4a, 4b und 4c ist das Verschwenkprinzip des Schwenkringes 5 abgebildet. Die beiden gegenüberliegenden Drehzapfen 11 und 12 stehen dabei in kraftschlüssiger Wirkverbindung mit jeweils einem Antriebsmittel 14. Somit sind jedem Drehzapfen 11 bzw. 12 ein Antriebsmittel 14 zugeordnet. Das jeweilige Antriebsmittel 14 treibt über ein Zwischenglied 15 den Drehzapfen 11 oder 12 wechselweise, wie dies nachfolgend näher erläutert ist, an.

Das Antriebsmittel 14 besteht aus einem Kolben 16, der parallel zu der Längsachse 4 des Futterkörpers 2 in diesem angeordnet ist. Die Kolben 16 und die Längsachse 4 verlaufen parallel zueinander. Der Kolben 16 wird dabei von einer Ausgangsstellung in eine Endstellung axial hin und her bewegt. Die Bewegung des jeweiligen Kolbens 16 erfolgt mit Hilfe eines Steuerkreislaufes 18, der aus mindestens einer Leitung 20 gebildet ist, in die eine Pumpe 19 eingebaut ist, durch die das in dem Steuerkreislauf 18 eingefüllte Medium, beispielsweise Hydraulikflüssigkeit, hin und her gepumpt ist. Die Leitungen 20 münden gegenüberliegend in einen Kolbenraum 21, 21' ein, in den der jeweilige Kolben 16 axial beweglich gelagert ist.

Die mit dem jeweiligen Drehzapfen 11 oder 12 zusammenwirkenden Zwischenglieder 15 bestehen bei dem oberen Drehzapfen 11 aus einem Antriebsrad 22, an dem vier Antriebsstege 24 angeformt sind, die radial nach außen abstehen und in einem Winkel von etwa 90° zueinander verlaufen. Das freie Ende des Kolbens 16 wirkt auf eines der Antriebsstege 24 des Antriebsrades 22 ein, und zwar dann, wenn der Kolben 16 in Richtung des Antriebsrades 22 bewegt wird. Die Verdrehung des Antriebsrades 22 bewirkt eine Verdrehung des Drehzapfens 11 um 45°. Durch diese Verdrehung des oberen Drehzapfens 11 wird automatisch der untere Drehzapfen 12 um 45° mit bewegt.

Während der obere Kolben 16 in Richtung des Antriebsrades 22 zugestellt wird, wird durch die Pumpe 19 der untere Kolben 16 zurückgezogen, so dass das dortige Zwischenglied 15, das als Vierkantprofil 23 ausgestaltet ist, in seiner Rotationsbewegung nicht behindert ist und gemeinsam mit dem oberen Antriebsrad 22 um 45° verschwenken kann. Sobald der untere Kolben 16 in der Ausgangsstellung überführt ist, wird dieser in Richtung des Vierkantprofils 23 zugestellt und wirkt auf eines der Teilsegmente des Vierkantprofils 23 ein, so dass dieses um weitere 45° verdreht ist. Gleichzeitig wird durch die Pumpe 19 der obere Kolben 16 zurückgezogen, wodurch das Antriebsrad 22 in seiner Verdrehbewegung nicht behindert ist.

Mit Hilfe dieser wechselweisen Betätigung der Kolben 16 entsteht somit eine schrittweise Verdrehung der Drehzapfen 11 und 12 um 90°. Wenn dieser Zustellzyklus erneut wiederholt wird, erfolgt eine Verschwenkung des Schwenkringes 5 um insgesamt 180°. Der Schwenkring 5 vollzieht demnach eine Rotation um die Schwenkachse 13 in einer Richtung.

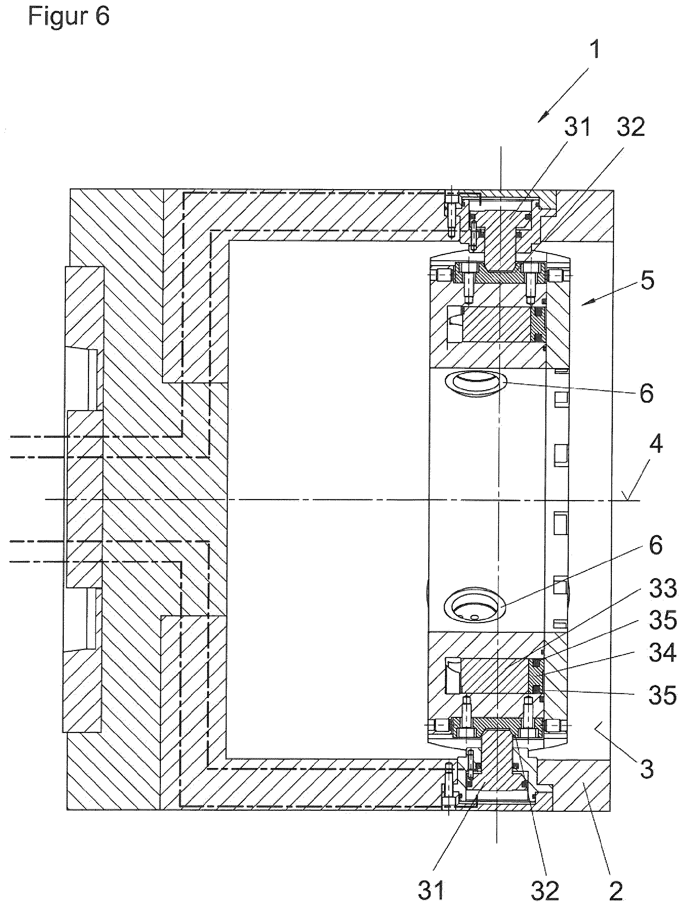

In Figur 6 ist zu entnehmen, dass der Schwenkring 5 mittels zweier Haltezapfen 31, die gegenüberliegend zueinander angeordnet sind und ein Paar bilden, an dem Futterkörper 2 abgestützt ist. Durch die beiden Haltezapfen 31 wird eine Fixierachse 31' geschaffen, die beabstandet von der Schwenkachse 13 und den von den Spannbacken 6 jeweils gebildeten Spannachsen 6' verläuft. Im gezeigten Ausführungsbeispiel beträgt der Winkelabstand zwischen der Fixierachse 31' und der Schwenkachse 13 115°. Die Haltezapfen 31 sind radial beweglich in dem Futterkörper 2 gelagert und können in Richtung des Schwenkringes 5 zugestellt werden. In die Außenmantelfläche des Schwenkringes 5 sind im Bereich der Haltezapfen 31 vier Aussparungen 32 eingearbeitet, deren Innenkontur an die Außenkontur der Haltezapfen 31 angepasst ist, so dass die Haltezapfen 31 während des Bearbeitungsvorganges des Werkstückes 7 in die fluchtend dazu verlaufenden Aussparungen 32 eingreifen, kann die Position des Haltezapfens 31 mittels einer Überwachungseinrichtung festgestellt werden und in Abhängigkeit von dieser Lage wird die Bewegung der Kolben 16 freigegeben oder blockiert.

Da der Schwenkring 5 schrittweise um 180° im Futterkörper 2 gedreht wird, sind ein Paar von Haltezapfen 31 und zwei Paare von Aussparungen 32 vorzusehen, denn durch die Verschwenkung des Schwenkringes 5 um 180° sind zwei Haltepositionen des Schwenkringes 5 an dem Futterkörper 2 vorzusehen.

Sobald die Haltezapfen 31 in die jeweilige Aussparung 32 eingreifen, wird der Schwenkring 5 zusätzlich in Rotationsrichtung an dem Futterkörper 2 abgestützt. Darüber hinaus ist an der Innenwand der Aufnahmeöffnung 3 des Futterkörpers 2 eine Planfläche 40 angearbeitet. Auf der Außenmantelfläche des Schwenkringes 5 ist eine Anlagefläche 39 vorgesehen, die im montierten Zustand des Schwenkringes 5 fluchtend zu der Planfläche 40 der Aufnahmeöffnung ausgerichtet ist. Die Anlagefläche 39 und die Planfläche 40 verlaufen senkrecht zu der Schwenkachse 13, so dass der Schwenkring 5 parallel zu der Planfläche 40 verdreht werden kann. Die Anlagefläche 39 des Schwenkringes 5 und die Planfläche 40 der Aufnahmeöffnung 3 verhindern eine Verdrehung des Schwenkringes 5 während der Rotation des Futterkörpers 2, so dass die Rotationskräfte des Futterkörpers 2 über die Haltezapfen 31 sowie die Aussparungen 32 und auf die Anlagefläche 39 übertragen sind.

## Patentansprüche

1. Schwenk-Spannfutter (1)
- mit einem Futterkörper (2), in dem eine zentrisch zu der Längsachse (4) des Futterkörpers (2) verlaufende und Aufnahmeöffnung (3) eingearbeitet ist,
- mit einem in der Aufnahmeöffnung (3) des Futterkörpers (2) eingesetzten Schwenkring (5), an dem mindestens drei radial zu der Längsachse (4) des Futterkörpers (2) zustellbare Spannbacken (6) gelagert sind, durch die ein zu bearbeitendes rotationssymmetrisches Werkstück (7) zentrisch zu der Längsachse (4) des Futterkörpers (2) in diesem arretierbar ist,
- mit einer in den Schwenkring (5) eingesetzten Zustelleinrichtung (8), durch die die Spannbacken (6) synchron bewegbar sind und mit zwei in dem Futterkörper (2) gelagerten Drehzapfen (11, 12) die in form- oder kraftschlüssiger Wirkverbindung mit dem Schwenkring (5) stehen, wobei die von den mindestens drei Spannbacken (6) gebildeten Spannachsen (6') winkelbeabstandet zu der von den Drehzapfen (11,12) gebildeten Schwenkachse (13) verlaufen,
**dadurch gekennzeichnet,**
**dass** jeder Drehzapfen (11,12) einem jeweiligen Antriebsmittel (14) zugeordnet ist, dass jeder Drehzapfen (11,12) wechselweise in kraftschlüssiger Wirkverbindung mit einem der Antriebsmittel (14) steht, wobei dass durch das jeweilige Antriebsmittel (14) die Drehzapfen (11, 12) gleichgerichtet um einen Rotationswinkel (α), vorzugsweise von 45°, verdreht sind, derart, dass der Schwenkring (5) eine Rotation um die Schwenkachse (13) in eine Richtung vollzieht.

2. Spannfutter nach Anspruch 1,
**dadurch gekennzeichnet,**
**dass** die Kolben (16) parallel zu der Längsachse (4) des Futterkörpers (2) ausgerichtet sind.

3. Spannfutter nach Anspruch 2,
**dadurch gekennzeichnet,**
**dass** der Steuerkreislauf (18) aus mindestens einer Leitung (20) besteht, die jeweils in einen der von dem Kolben gebildeten Kolbenräume (21) einmündet, dass in den Steuerkreislauf (18) mindestens eine Förderpumpe (19) eingesetzt ist, durch die das Medium des Steuerkreislaufes (18) in die Kolbenräume (21) der Kolben (16) wechselweise eingepresst ist.

4. Spannfutter nach Anspruch 1 oder 3,
**dadurch gekennzeichnet,**
**dass** das Zwischenglied (15) als Antriebsrad (22) und/oder als Vierkantprofil (23) ausgestaltet ist, dass das Antriebsrad (22) mit vier abstehenden und senkrecht zueinander verlaufenden Antriebsstegen (24) ausgestaltet ist, auf die jeweils einer der Kolben (16) einwirkt und dass auf das jeweilige Vierkantprofil (23) einer der Kolben (16) anliegt, dass das Antriebsrad (22) und das Vierkantprofil (23) orthogonal zu der Schwenkachse (13) ausgerichtet sind.

5. Spannfutter nach einem der vorgenannten Ansprüche
**dadurch gekennzeichnet,**
**dass** in dem Futterkörper (2) zwei gegenüberliegende Haltezapfen (31) radial beweglich gelagert sind und dass die von den Haltezapfen (31) gebildete Fixierungsachse (31') beabstandet zu der Schwenkachse (13) und der von den Spannbacken (6) gebildeten Spannachsen (6'), vorzugsweise in einem Winkel von 115° bezogen auf die Schwenkachse (13), verläuft.

6. Spannfutter nach Anspruch 5,
**dadurch gekennzeichnet,**
**dass** in den Schwenkring (5) jeweils zwei Paare von Aussparungen (32) eingearbeitet sind, die in Richtung des Futterkörpers (2) ausgerichtet sind und dass im Arretierungszustand die Haltezapfen (31) in eines der Paare von Aussparungen (32) eingreift.

7. Spannfutter nach Anspruch 5 oder 6,
**dadurch gekennzeichnet,**
**dass** mittels einer elektrischen und/oder mechanischen Überwachungseinrichtung die Position der jeweiligen Haltezapfen (31) feststellbar ist, und dass in Abhängigkeit von der Position der Haltezapfen (31) die Bewegungen der Antriebsmittel (14) freigegeben oder blockiert sind.

8. Spannfutter nach einem der vorgenannten Ansprüche,
**dadurch gekennzeichnet,**
**dass** die Zustelleinrichtung (8) der mindestens drei Spannbacken (6) aus einem Synchronring (33) gebildet ist, der parallel zu der Längsachse (4) des Futterkörpers (2) in dem Schwenkring (5) verschiebbar gelagert ist, dass an dem Synchronring (33) im Bereich der jeweiligen Spannbacke (6) eine geneigt verlaufende Antriebsfläche (36) bezogen auf die Längsachse (4) des Futterkörpers (2) angearbeitet ist und dass an der jeweiligen Spannbacke (6) eine Anlagefläche (37) vorgesehen ist, die mit der Antriebsfläche (36) des Synchronrings (33) derart zusammenwirkt, dass die Spannbacken (6) radial aus dem Schwenkring (5) bewegt sind.

9. Spannfutter nach Anspruch 8,
**dadurch gekennzeichnet,**
**dass** der Synchronring (33) in einem Hydraulik- oder Pneumatikkreislauf (38) angeordnet ist und dass der Synchronring (33) wechselweise zur axialen Bewegung mit einem Medium beaufschlagt ist.

10. Spannfutter nach einem der vorgenannten Ansprüche,
**dadurch gekennzeichnet,**
**dass** der Futterkörper (2) im Betriebszustand um die Längsachse (4) rotiert und dass die Rotationsbewegungen des Futterkörpers (2) auf den Schwenkring (5) übertragen sind.

11. Spannfutter nach einem der vorgenannten Ansprüche,
**dadurch gekennzeichnet,**
**dass** an der äußeren Mantelfläche des Schwenkringes (5) zwei zueinander gegenüberliegende Anlageflächen (39) angearbeitet sind und dass die Aufnahmeöffnung (3) des Futterkörpers (2) zwei Planflächen (40) aufweist, die fluchtend zu der Anlagefläche (39) des Schwenkringes (5) im montierten Zustand verlaufen.

12. Spannfutter nach Anspruch 11,
**dadurch gekennzeichnet,**
**dass** die Anlagefläche (39) des Schwenkringes (5) und die Planfläche (40) der Aufnahmeöffnung (3) des Futterkörpers (2) orthogonal zu der Schwenkachse (13) der Drehzapfen (11, 12) ausgerichtet sind.

13. Spannfutter nach einem der vorgenannten Ansprüche,
**dadurch gekennzeichnet,**
**dass** in dem Schwenkring (5) vier oder mehr Spannbacken (6) vorgesehen sind, die in einem Teilungswinkel von 360° geteilt durch die Anzahl der Spannbacken (6) zueinander beabstandet sind.

## Claims

1. A pivoting collet chuck (1)
- with a chuck body (2) in which an accommodation opening (3) is worked running centrally in relation to the longitudinal axis (4) of the chuck body (2),
- with a pivoting ring (5) inserted in the accommodation opening (3) of the chuck body (2) on which at least three clamping jaws (6) that can be advanced are mounted radially in relation to the longitudinal axis (4) of the chuck body (2) by means of which a rotationally symmetrical workpiece (7) to be machined can be locked in the chuck body (2) centrally in relation to the longitudinal axis (4) of the chuck body (2),
- with an advance device (8) inserted into the pivoting ring (5) by means of which the clamping jaws (6) can be moved synchronously and with two pivot pins (11, 12) mounted in the chuck body (2) in a shape or force-locking active connection with the pivoting ring (5), in which case the clamping axes (6') formed by the clamping jaws (6), of which there are at least three, run at a different angle from the pivoting axis (13) formed by the pivot pins (11, 12),
**characterised in that**,
each of the pivot pins (11, 12) is assigned to a particular driving means (14), that each pivot pin (11, 12) is alternately in a force-locking active connection with one of the driving means (14) in which case the particular driving means (14) causes the pivot pins (11, 12) to be adjusted by an angle of rotation (α), preferably 45°, in such a way that the pivoting ring (5) undertakes a rotation about the pivoting axis (13) in one direction.

2. The pivoting collet chuck in accordance with Claim 1,
**characterised in that**,
the pistons (16) are aligned parallel with the longitudinal axis (4) of the chuck body (2).

3. The pivoting collet chuck in accordance with Claim 2,
**characterised in that**,
the control circuit (18) comprises at least one line (20), each of which emerges into one of the piston spaces (21) formed by the piston, that the control circuit (18) has at least one feed pump (19) inserted into it, by means of which the medium of the control circuit (18) is pressed into the piston spaces (21) of the pistons (16).

4. The pivoting collet chuck in accordance with Claim 1 or 3,
**characterised in that**,
that the intermediate element (15) is configured as a drive gear (22) and/or as a square profile, that the drive gear (22) is equipped with four protruding drive projections (24) that run perpendicular to one another, on which one of the pistons (16) acts in each case and that one of the pistons bracket 16) is in contact with the particular square profile (23), that the drive gear (22) and the square profile (23) are aligned at right angles to the pivoting axis (13).

5. The pivoting collet chuck in accordance with one of the aforementioned claims,
**characterised in that**,
the chuck body (2) has two holding pins (31) arranged opposite one another which are mounted so as to be radially movable, and that the fixing axis (31') formed by the holding pens (31) is at a distance from the pivoting axis (13) and the clamping axes (6') formed by the clamping jaws (6) runs at an angle in relation to the pivoting axis (13) which is preferably 115°.

6. The pivoting collet chuck in accordance with Claim 5,
**characterised in that**,
two pairs of recesses (32) are worked into each pivoting ring (5) and are aligned in the direction of the chuck body (2), and that in the locked condition, the holding pins (31) engage in one of the pairs of recesses (32).

7. The pivoting collet chuck in accordance with Claim 5 or 6,
**characterised in that**,
the position of the particular holding pin (31) can be established by means of an electrical and/or mechanical monitoring device; and that depending on the position of the holding pins (31), the movements of the driving means (14) are released or blocked.

8. The pivoting collet chuck in accordance with the aforementioned claims,
**characterised in that**,
the feed device (8) which is formed of at least three clamping jaws (6) from a synchronous ring (33) mounted in parallel to the longitudinal axis (4) of the chuck body (2) in the pivoting ring (5), that a drive surface (36) in the region of the particular clamping jaw (6) is worked on the synchronous ring (33) running at an angle in relation to the longitudinal axis (4) of the chuck body (2) and that the particular clamping jaw (6) has a contact surface (37) provided on it which interacts with the drive surface (36) of the synchronous ring (33) in such a way that the clamping jaws (6) are moved radially out of the pivoting ring (5).

9. The pivoting collet chuck in accordance with Claim 8,
**characterised in that**,
the synchronous ring (33) is arranged in a hydraulic or pneumatic circuit (38) and that the synchronous ring (33) has a medium applied to it in alternating phases for axial movement.

10. The pivoting collet chuck in accordance with one of the aforementioned claims,
**characterised in that**,
the chuck body (2) rotates about the longitudinal axis (4) in operational condition, and that the rotational movements of the chuck body (2) are transferred to the pivoting ring (5).

11. The pivoting collet chuck in accordance with one of the aforementioned claims,
**characterised in that**,
two contact surfaces (39) opposite one another are arranged on the outer jacket surface of the pivoting ring (5) and that the accommodation opening (3) of the chuck body (5) has two plane surfaces (40) that run flush with the contact surface (39) of the pivoting ring (5) when mounted.

12. The pivoting collet chuck in accordance with Claim 11,
**characterised in that**,
the contact surface (39) of the pivoting rings (5) and the plane surface (40) of the accommodation opening (3) of the chuck body are aligned at right angles to the pivoting axis (13) of the pivot pins (11, 12).

13. The pivoting collet chuck in accordance with one of the aforementioned claims,
**characterised in that**,
four or more clamping jaws (6) are provided in the pivoting ring (5) and are spaced apart from one another at a pitch angle of 360° divided by the number of the clamping jaws (6).

## Revendications

1. Mandrin de serrage pivotant (1),
- avec un corps de mandrin (2), dans lequel il est pratiqué une ouverture de réception (3) centrée par rapport à l'axe longitudinal (4) du corps de mandrin (2),
- avec un anneau de pivotement (5) inséré dans l'ouverture de réception (3) du corps de mandrin (2), dans lequel il est logé au moins trois mors de serrage (6) avançant radialement vers l'axe longitudinal (4) du corps de mandrin (2) et qui permettent de positionner dans le corps de mandrin (2) une pièce à usiner à symétrie de rotation (7) de manière centrée sur l'axe longitudinal (4) du corps de mandrin (2),
- avec un équipement d'avance (8) monté dans l'anneau de pivotement (5) qui permet de déplacer de manière synchrone les mors de serrage (6) et avec deux pivots (11, 12) logés dans le corps de mandrin (2) et liés par la forme et la force avec l'anneau de pivotement (5), où les axes de serrage (6') formés par au moins trois mors de serrage (6) s'étendent à un angle défini par rapport à l'axe de pivotement (13) formé par les pivots (11, 12),
**caractérisé en ce que**
chaque pivot (11, 12) est assigné à un moyen d'entraînement respectif (14), que chaque pivot (11, 12) est lié alternativement par la force et la forme avec un des moyens d'entraînement (14), où les moyens d'entraînement respectifs (14) ont pour effet que les pivots (11, 12) sont tournés en sens identique autour d'un angle de rotation α, de préférence 45°, de sorte que l'anneau de pivotement (5) décrit une rotation en sens unique autour de l'axe de pivotement (13).

2. Mandrin de serrage d'après la revendication 1,
**caractérisé en ce que**
les pistons (16) sont parallèles à l'axe longitudinal (4) du corps de mandrin (2).

3. Mandrin de serrage d'après la revendication 2,
**caractérisé en ce que**
le circuit de commande (18) comprend au moins une conduite (20) aboutissant respectivement dans une des chambres (21) formées par le piston (16), que dans le circuit de commande (18), il est monté au moins une pompe de refoulement (19) qui refoule le milieu du circuit de commande (18) alternativement dans les chambres (21) des pistons (16).

4. Mandrin de serrage d'après les revendications 1 ou 3,
**caractérisé en ce que**
l'élément intermédiaire (15) est conçu sous la forme d'une roue d'entraînement (22) et/ou d'un profil carré (23), que la roue d'entraînement (22) comporte quatre traverses d'entraînement (24) saillantes et perpendiculaires l'une à l'autre, sur lesquelles agit respectivement un des pistons (16), que respectivement un des pistons (16) porte sur le profil carré respectif (23), et que la roue d'entraînement (22) et le profil carré (23) forment un angle droit avec l'axe de pivotement (13).

5. Mandrin de serrage d'après une des revendications précédentes,
**caractérisé en ce que**
deux tétons de retenue opposés (31) sont logés mobiles en direction radiale dans le corps de mandrin (2), et que l'axe de fixation (31') formé par les tétons de retenue (31) s'étend à une distance définie de l'axe de pivotement (13) et des axes de serrage (6') formés par les mors de serrage (6), de préférence sous un angle de 115° par rapport à l'axe de pivotement (13).

6. Mandrin de serrage d'après la revendication 5,
**caractérisé en ce que**
dans l'anneau de pivotement (5), il est pratiqué respectivement deux paires d'évidements (32) alignés en direction du corps de mandrin (2), et qu'en position arrêtée, les tétons de retenue (31) s'engrènent dans une des paires d'évidements (32).

7. Mandrin de serrage d'après les revendications 5 ou 6,
**caractérisé en ce que**
moyennant un équipement de surveillance électrique et/ou mécanique, il est identifié la position des tétons de retenue respectifs (31), et que les mouvements des moyens d'entraînement (14) sont autorisés ou bloqués en dépendance de la position des tétons de retenue (31).

8. Mandrin de serrage d'après une des revendications précédentes,
**caractérisé en ce que**
l'équipement d'avance (8) des au moins trois mors de serrage (6) est réalisé par un anneau synchrone (33) qui est logé glissant dans l'anneau de pivotement (5), parallèlement à l'axe longitudinal (4) du corps de mandrin (2), qu'au niveau du mors de serrage respectif (6), il est pratiqué sur l'anneau synchrone (33) une face d'entraînement (36) inclinée par rapport à l'axe longitudinal (4) du corps de mandrin (2), et que sur le mors de serrage respectif (6), il est prévu une face de butée (37) collaborant avec la face d'entraînement (36) de l'anneau synchrone (33) de sorte que les mors de serrage (6) sortent radialement hors de l'anneau de pivotement (5).

9. Mandrin de serrage d'après la revendication 8,
**caractérisé en ce que**
l'anneau synchrone (33) est prévu dans un circuit hydraulique ou pneumatique (38) et que pour le mouvement axial, l'anneau synchrone (33) est soumis alternativement à l'action d'un milieu.

10. Mandrin de serrage d'après une des revendications précédentes,
**caractérisé en ce**
**qu'**en service, le corps de mandrin (2) effectue une rotation autour de l'axe longitudinal (4) et que les mouvements de rotation du corps de mandrin (2) sont transmis sur l'anneau de pivotement (5).

11. Mandrin de serrage d'après une des revendications précédentes,
**caractérisé en ce que**
sur l'enveloppe extérieure de l'anneau de pivotement (5), il est pratiqué deux faces de butée (39) opposées l'une à l'autre et que l'ouverture de réception (3) du corps de mandrin (2) comprend deux faces planes (40) qui, en état monté, sont en alignement précis sur la face de butée (39) de l'anneau de pivotement (5).

12. Mandrin de serrage d'après la revendication 11,
**caractérisé en ce que**
la face de butée (39) de l'anneau de pivotement (5) et la face plane (40) de l'ouverture de réception (3) du corps de mandrin (2) forment un angle droit avec l'axe de pivotement (13) des pivots (11, 12).

13. Mandrin de serrage d'après une des revendications précédentes,
**caractérisé en ce que**
dans l'anneau de pivotement (5), il est prévu au moins quatre mors de serrage (6) espacés sous un angle de 360° divisé par le nombre de mors de serrage (6).
